# EUROPEAN PATENT APPLICATION

(11) **EP 1 002 570 A1**
(43) Date of publication of application: **24.05.2000**
(21) Application number: 98402906.6
(22) Date of filing: 20.11.1998
(51) Int. Cl.: B01J 4/02, B01J 19/00, B01L 3/02, B41J 2/23, B41J 2/235, B41J 2/25, B41J 2/265

(54) **Capillary transfer device for high density arrays**

(71) Applicant: CORNING INCORPORATED, Corning, N.Y. 14831 (US)
(72) Inventor: Root, David, Corning Incorporated Patent Departm., Corning, NY 14831 (US); Dannoux, Thierry Luc Alain, Corning Inc.Patent Dep, Corning, NY 14831 (US)
(74) Representative: Marchant, James Ian

(57) **Abstract**

A method and apparatus for printing high density biological or chemical arrays utilizes a plurality of rods (22) each housed within discrete a channel (12) of a multi-channeled form (50,61). The form (50,61) is shaped such that each channel (12) is capable of retaining liquid by capillary pressure force. The liquid is expelled from the channels (12) by extending the rods (22) beyond the output face of each channel (12). Each rod (22) retains a representative drop (40) of liquid from its respective channel (12) which is contacted to a substrate surface (36) causing transfer. Ideally, the rods (22) are all connected to a rear plate (76) thereby enabling simultaneous transfer of any number of liquid drops (40).

## Description

### Field Of Invention

The invention relates to a device and method for the printing of high density arrays for use in biological and chemical assays in the form of a device that can be used in sample transfer between a multi-channeled reservoir tool and a substrate.

### Background of Invention

Hybridization is a hydrogen- bonding interaction between two nucleic acid strands that obey the Watson-Crick complementary rules. All other base pairs are mismatches that destabilize hybrids. Since a single mismatch decreases the melting temperature of a hybrid by up to 10° C, conditions can be found in which only perfect hybrids can survive. Hybridization comprises contacting the strands, one of which is usually immobilized on a solid support and the other usually bears a radioactive, chemiluminescent or fluorescent label, and then separating the resulting hybrids from the unreacted labeled strands by washing the support. Hybrids are recognized by detecting the label bound to the surface of the support.

Oligonucleotide hybridization is widely used to determine the presence in a nucleic acid of a sequence that is complimentary to the oligonucleotide probe. In many cases, this provides a simple, fast, and inexpensive alternative to conventional sequencing methods. Hybridization does not require nucleic acid cloning and purification, carrying out base-specific reactions, or tedious electrophoretic separations. Hybridization of oligonucleotide probes has been successfully used for various purposes, such as analysis of genetic polymorphisms, diagnosis of genetic diseases, cancer diagnostics, detection of viral and microbial pathogens, screening of clones, genome mapping and ordering of fragment libraries.

An oligonucleotide array is comprised of a number of individual oligonucleotide species tethered to the surface of a solid support in a regular pattern, each species in a different area, so that the location of each oligonucleotide is known. An array can contain a chosen collection of oligonucleotides, e.g., probes specific for all known clinically important pathogens or specific for all known clinically important pathogens or specific for all known sequence markers of genetic diseases. Such an array can satisfy the needs of a diagnostic laboratory. Alternatively, an array can contain all possible oligonucleotides of a given length *n*. Hybridization of a nucleic acid with such a comprehensive array results in a list of all its constituent *n*-mers, which can be used for unambiguous gene identification (e.g., in forensic studies), for determination of unknown gene variants and mutations (including the sequencing of related genomes once the sequence of one of them is known), for overlapping clones, and for checking sequences determined by conventional methods. Finally, surveying the *n*-mers by hybridization to a comprehensive array can provide sufficient information to determine the sequence of a totally unknown nucleic acid.

Oligonucleotide arrays can be prepared by synthesizing all the oligonucleotides, in parallel, directly on the support, employing the methods of solid-phase chemical synthesis in combination with site-directing masks as described in US Pat. 5,510,270. Four masks with non-overlapping windows and four coupling reactions are required to increase the length of tethered oligonucleotides by one. In each subsequent round of synthesis, a different set of four masks is used, and this determines the unique sequence of the oligonucleotides synthesized in each particular area. Using an efficient photolithographic technique, miniature arrays containing as many as 10⁵ individual oligonucleotides per cm² of area have been demonstrated.

Another technique for creating oligonucleotide arrays involves precise drop deposition using a piezoelectric pump as described in US Pat. 5,474,796. The piezoelectric pump delivers minute volumes of liquid to a substrate surface. The pump design is very similar to the pumps used in ink jet printing. This picopump is capable of delivering 50 micron diameter (65 picoliter) droplets at up to 3000 Hz and can accurately hit a 250 micron target. The pump unit is assembled with five nozzles array heads, one for each of the four nucleotides and a fifth for delivering activating agent for coupling. The pump unit remains stationary while droplets are fired downward at a moving array plate. When energized, a microdroplet is ejected from the pump and deposited on the array plate at a functionalized binding site. Different oligonucleotides are synthesized at each individual binding site based on the microdrop deposition sequence.

Another approach using arrays is the pin dipping method for parallel oligonucleotide synthesis. Geysen, *J. Org*. *Chem.* 56, 6659 (1991). In this method, small amounts of solid support are fused to arrays of solenoid controlled polypropylene pins, which are sequentially dipped into trays of the appropriate reagents. The density of the arrays is limited by this process.

Further approaches to forming an array involve taking presynthesized oligonucleotide or cDNA sequences from seperately prepared aqueous mixtures and transferring them to substrate either individually or in some small multiple. This may be accomplished for example by repeatedly contacting a substrate surface with typographic pins holding droplets, using ink jet printing mechanisms to lay down an array matrix, or by use of a pen plotter. These printing processes are limited by the time and expense required in transferring 10³ or greater different sequence mixtures onto defined positions on a substrate.

Commonly assigned EPO application ######, incorporated herein by reference, discloses a capillary reservoir device and method of printing an array of biomolecules. The tool is made up of a plurality of open ended channels collectively forming a matrix. The matrix has been redrawn and cut such that the pitch of the channels on the loading end is far larger than the pitch of the channels on the liquid delivery end. The upper portion of each channel serves as a reservoir, while the opposing end, which has been formed by the redrawing process, is diametrically sized such that liquid in the reservoir is retained by capillary pressure at the delivery end. Each channel is filled with a liquid solution preferably containing a different known biomolecule. The application discloses two methods of transferring drops of liquid from the channels of the liquid deposition tool to a substrate. In the first method, drops are forced directly out of the channels by some external force and contacted to the substrate directly. Unfortunately, this type of printing requires an environment of zero or negetive capillary pressure. This may require the transfer to occur in an environmental immiscible liquid medium other than air.

The second method requires a typographic pin array in the form of a plate having a matrix of pins aligned such that each pin from the matrix fits into a corresponding channel from the output face of the reservoir device. The pin plate is contacted with the output face such that each pin enters each respective channel, contacts the liquid therein, and is removed. The pin tips each retain some volume of liquid from the channels by capillary force. The pin array is then contacted with a suitable substrate such that some volume of the liquid is transferred from the pins to the substrate. In order for the pin plate transfer method to work effectively, the pin plate must be constructed such that each pin exactly registers with a corresponding channel. If the array of channels making up the printing tool has been slightly deformed in any way during any of the steps of extrusion, sintering, or redrawing, the pin plate must be constructed to account for these slight deformations. Of course the pin plate can be constructed using a photolithography mask taking into account the deformations, but this approach requires image analysis and customized pin plates for each printing tool.

### Summary of Invention

The present invention provides a liquid deposition tool, also called a capillary reservoir device, and methods for depositing a high density biological or chemical array onto a substrate. The tool is made up of a plurality of open ended channels collectively forming a matrix. The matrix has been redrawn and cut such that the pitch of the channels on the loading end is far larger than the pitch of the channels on the liquid delivery end. The upper portion of each channel serves as a reservoir, while the opposing end, which has been formed by the redrawing process, is diametrically sized such that liquid in the reservoir is retained by capillary pressure at the delivery end. Contained within each channel and running the channel's full length, is a rod. Each rod connects to a rigid template at one end such that when the template is pushed into contact with the input face of the capillary reservoir device, the rod tips housed within the respective channels extend beyond the output face of the device. In operation, each capillary is filled with liquid and when the rod tips are extended beyond the output face, they will each have a droplet of liquid, representative of the liquid held within its respective channel, attached by capillary force to the tip. The droplets are then contacted to a substrate in order to form an array.

### Brief Description of the Figures

FIG. 1 is a three dimensional view of the capillary reservoir device that is the subject of EPO application #####.

FIG. 2 is a partial view of the output face of the capillary reservoir device of the present invention.

FIG. 3 is a cross sectional view taken along the line 3-3 of FIG. 2 where the capillary reservoir device is positioned above a substrate.

FIGS 4-6 depict a sequence of steps in the process of printing liquid drops onto a substrate, as shown from the same cross-sectional view of FIG 3.

FIG. 7 is a three dimensional view of an extruded, sintered, and redrawn form.

FIG. 8 is a side view of a reservoir device of the present invention as well as a top view of a section that has been cut from the input end of the device.

FIG. 9 is a schematic cross sectional view of the array printing apparatus of the present invention.

FIG. 10 is a photograph of the output end of the capillary reservoir device having rods contained within select channels.

FIG. 11 is an enlargement of the photograph of FIG. 10 showing four channels, each filled with a rod.

FIG. 12 is a sequential series of photographs depicting 4 rods extended from the output face of the capillary reservoir device printing liquid on a substrate surface.

FIG. 13 is a top view of a substrate that has an array of liquid droplets printed from the device of FIG. 10.

### Detailed Description of the Invention

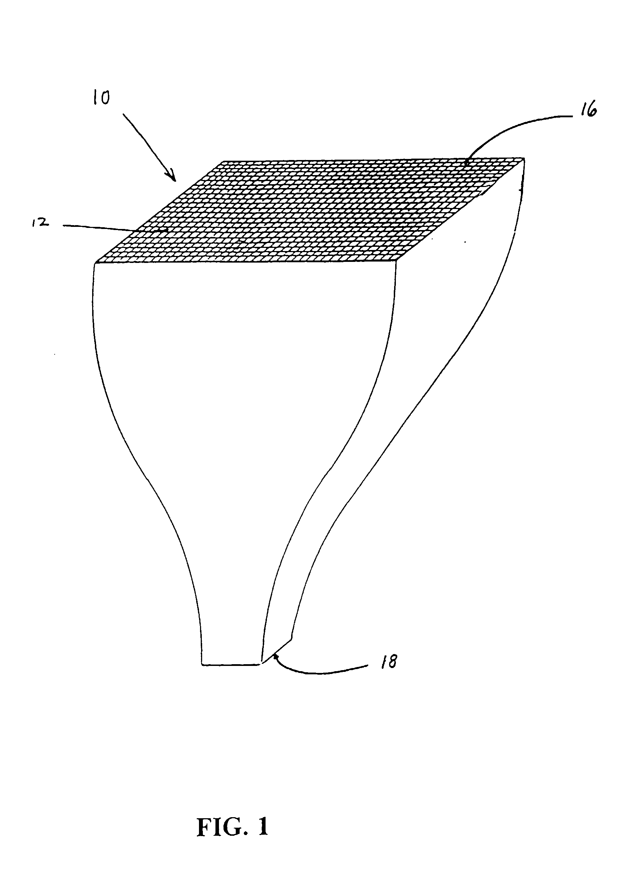

Commonly assigned EPO application EP 98401021.5, incorporated herein by reference, discloses a capillary reservoir device, as shown in FIG. 1, and a method of printing an array of biomolecules. The following description relates to a pin liquid transfer mechanism for use in conjunction with such a tool.

The capillary reservoir device **10** of FIG. 1 has a plurality of open ended channels **12** collectively forming a matrix having a top or input face **16,** and a bottom or output face **18**, of predetermined cross sectional area. Each individual channel has continuous and fluid impervious walls defining a liquid reservoir. The cross sectional area of each channel decreases proportionally from top to bottom. The liquid delivery or output end of each channel is sized such that liquid is loaded into each channel through the input face and remains contained within each channel by means of capillary pressure.

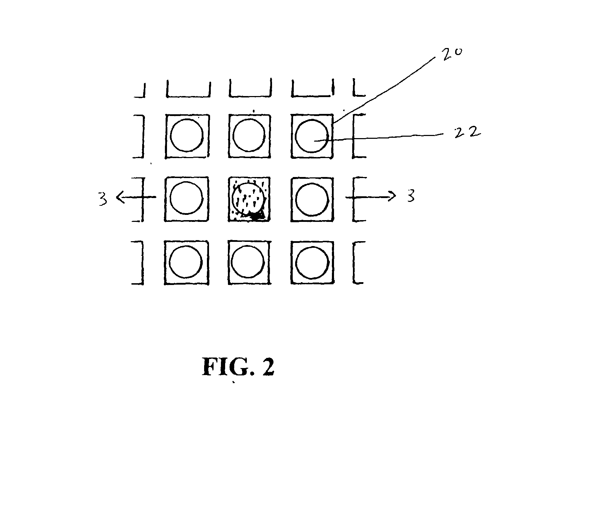

FIG. 2 shows a partial view looking at the output face of a capillary reservoir device from below. Each square region represents the output face **20** of an individual channel. Each round region **22** represents a rod housed within each respective channel. The invention relates to the concept of using these internally housed rods as a means for liquid transfer and delivery to a substrate. Any conceivable substrate may be used in this invention.

Calibrated wires also called rods are inserted into the input end of each channel of the reservoir device. One end of each rod is immobilized on a movable rear plate, while the other end is cut and polished such that the collective bundle or matrix of rod tips fall within the same horizontal plane. The rod length is set such that when the rear plate moves toward the input face of the reservoir device, the matrix of rod tips are extended a short distance from the device, for example between 150 and 300 µm.

The rods may be made from any variety of materials. For example, the rods may be made of glass fiber, a metal or a polymer. Preferably, the rods are treated such that the rod tips are wetting while the sides are non-wetting. Such treatments are described in detail in EPO patent application EP 98401021.5, which is incorporated herein by reference.

The substrate may be biological, nonbiological, organic, inorganic, or a combination of any of these, existing as particles, strands, precipitates, gels, sheets, tubing, spheres, beads, porous beads, containers, capillaries, pads, slices, films, plates, multiwell plates, slides, membranes, etc. The substrate is preferably flat but may take on a variety of surface configurations. For example, the substrate may contain raised or depressed regions on which liquid is deposited. Further the substrate may be glass, polymer or membrane into which channels have been etched; or it may contain regions that have been made porous by means of a chemical etchant. The substrate and its surface preferably form a rigid support on which a liquid with the appropriate surface energy can be deposited

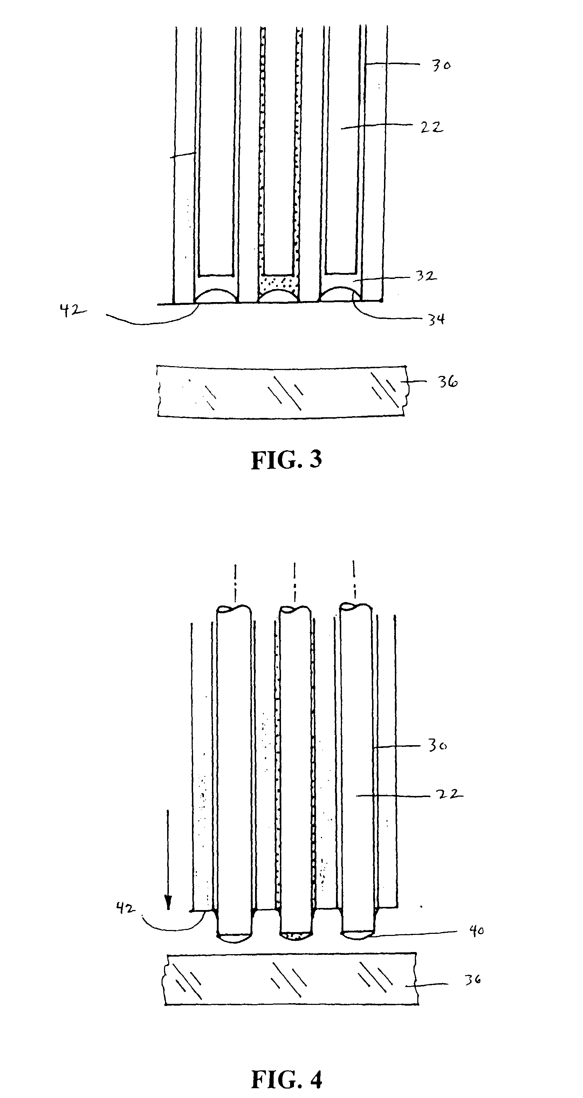

FIG. 3 is a cross section view taken along the line 3-3 of FIG. 2. Three channels **30**, each containing a different liquid are shown. As an example, each channel may contain an acrylamide solution with a plurality of known distinct oligonucleotides suspended therein. For purposes of illustration, each channel is filled with a different solution **32** in the space not occupied by the rod **22**. It should be noted that the rods are located above the meniscus **34** formed by the liquid-channel interface. The goal is to print a droplet of liquid from each reservoir onto the substrate **36**.

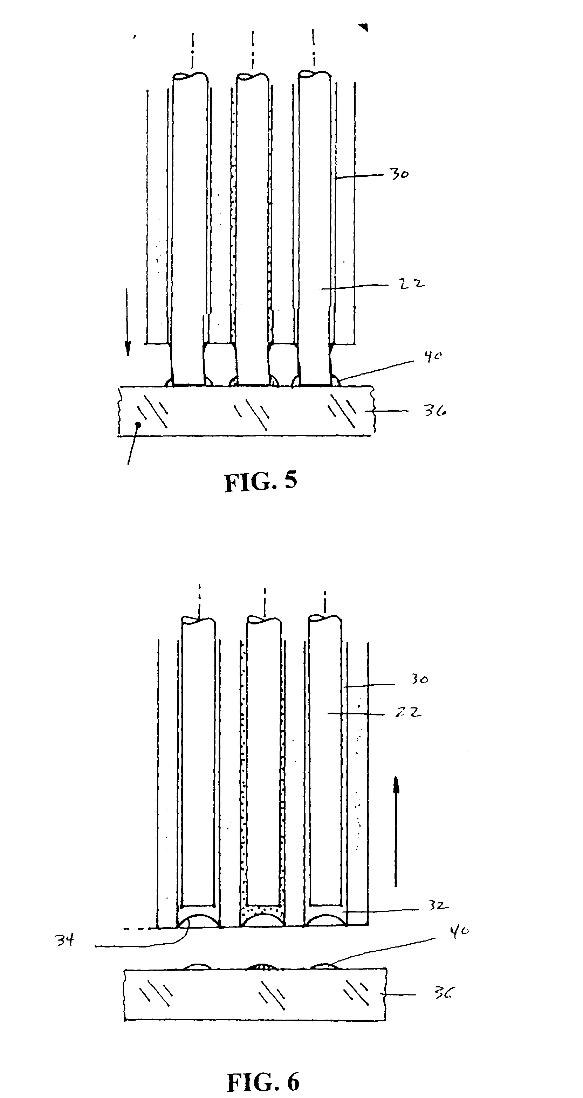

In FIG. 4, each rod **22** has been pushed from the respective channel **30** housing it. The rods are extended by mechanical motion of the rear plate moving toward the input face of the reservoir device. Once extended beyond the output face **42**, each rod tip holds a drop **40** of liquid from it's respective channel **30** by surface tension. Preferably, the diameter of each of the rods **22** is identical. The rods **22** can be calibrated to consistently deliver predetermined volumes of liquid. The droplets **40** are next contacted with the surface **36** of the substrate as shown in FIG. 5. The rods **22** are retracted back into the channels **30** by pulling the rear plate (not shown) away from the input face of the reservoir device, and a volume of liquid **40** remains on the substrate **36** by means of surface tension, as shown in FIG. 6. Once the rods **22** have been retracted behind the meniscus **34**, the tool is ready to print the same array onto another substrate.

Preferably, the rods all have planar tips that lie within the same plane. However, it is possible to make the rods varying lengths in order to conform to the surface relief features of any substrate. Further, the rods have some space within the respective channel, particularly toward the input end of the device, to flex in order to accommodate imperfections or raised areas on the substrate surface.

The rods themselves occupy space within the channel that would otherwise contain liquid, but the displaced volume only amounts to approximately between 10% and 50% of the total channel volume, depending on the shape of the channel. Even with the displacement, a 100 µl channel can provide between 500,000 and 900,000 100 pl drop transfers.

The internal rod actually increases the local capillary pressure within the channel. For example, for a channel that is 120 x 120 µm square, the local capillary pressure can be determined by the formula P = 2γ/r, where γ is the liquid surface tension and r is the radius of the part of the channel that contains liquid. In the case where the capillary contains only liquid, r ≈ 60 µm, and P = 2γ/60 N/m. When the capillary contains both liquid and a rod having a radius of approximately 50 µm, r ≈ 15 µm, and P = 2γ/15 N/m. This demonstrates an approximate fourfold increase in capillary pressure as between the capillary containing only liquid and the same capillary containing both liquid and rod. The increase in capillary pressure aids in the retention of liquid within the channels and helps allow for printing in vertical, horizontal, and inverted positions.

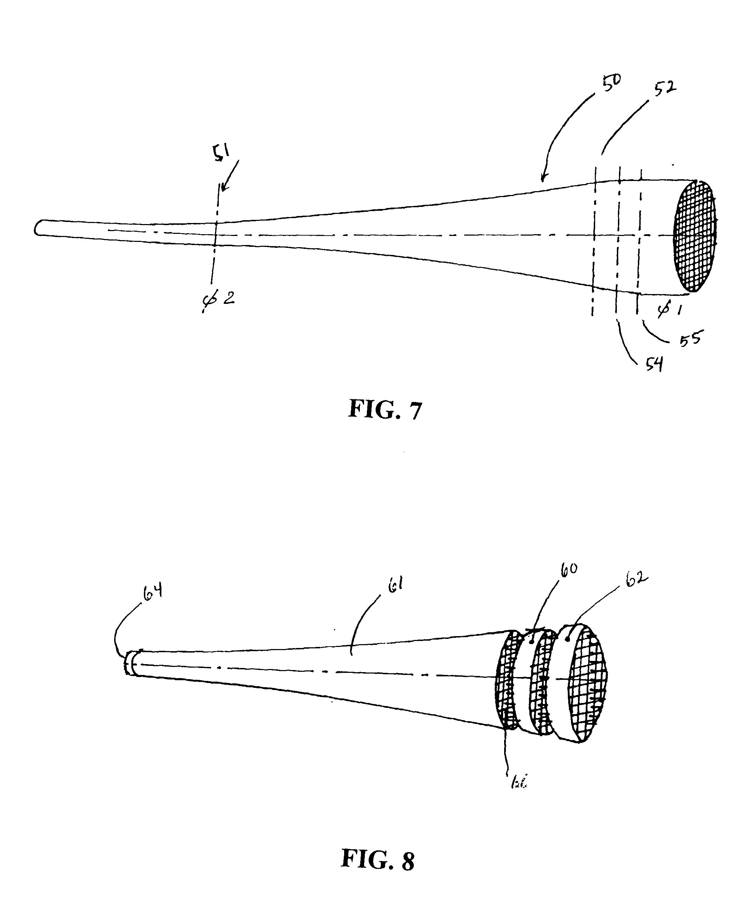

FIG.7 and FIG. 8 help illustrate one method for construction of the reservoir device having internal rods. As described in EPO patent application EP 98401021.5, a slurry of particulate glass and an organic binder are extruded though a die forming a multi-celled block preform. The preform in then sintered driving off the binder and consolidating the glass. Next, the resultant sintered form is drawn down such that cross sectional diameter is significantly reduced, a term of art called "redraw". FIG. 7 shows a form 50 that has been redrawn.

Once the form has been redrawn, cuts **51, 52** may be made perpendicular to the length of the form to establish the input and output face of the resultant capillary reservoir device. These perpendicular cuts may be made at any point along the form in order to establish any desired diameter for the input and output faces, and in order to accommodate the size of any array. In FIG. 7, cut **52** exposes the input face, while cut **51** exposes the output face.

In order to make the rear plate, a section cut **54** of the form **50**, made just above what is to become the input face of the reservoir device, can be made. What results from these cuts is a disk section whose chambers conform and register exactly with the channels of the reservoir device. In other words, one face of the section piece matches exactly with the input face of the reservoir device. A flat plate is preferably attached to the other face of the section in order to close off the individual chambers within the section. This sectioned piece, also called a rear plate, is set aside while the channels are loaded with rods.

In an alternative embodiment and as shown in FIGS. 7 and 8, two disks are cut from the form **50** along lines **54** and **55**, just above what is to become the input face of the reservoir device **61**. The first disk **60** is used as a registration aid, while the second disk **62** is used to make the rear plate. This embodiment is described in more detail below. FIG. 8 further shows the reservoir device having an exposed output face **64** and input face **66.**

Rods are preferably of uniform diameter and sized such that they occupy approximately 80% of the cross sectional area of the output end of the device. They are loaded individually into the input ends of each channel and fed through until each extends beyond the output face. Next, the end of each rod extending from the input face is fitted into a corresponding chamber from the rear plate and fixed in position by epoxy for example Once all the rods are fixed in place, as the rear plate moves, so move the rods slidably within the channels The rear plate is next temporarily fixed in position preferably approximately between 150-300 µm, and as far as 1 mm from the input end while the rods are cut so that each rod tip is located within the same plane as the output face of the device. This way, when the rear plate comes in contact with the input face of the device, the rod tips will each be extended an identical distance from the output face Pulling the rear plate away from the input face causes the rods to be retracted. Ideally, in operation, the rod tips are retracted into the channels past the liquid meniscus that exists within each. They are extended together and contacted with a substrate such that a liquid drop is transferred from the rod tip to the substrate.

In a preferred embodiment, the rear plate will not come into contact with the input face of the reservoir. Instead, the rods are cut at a length to allow a gap of 500-800 µm between the rear plate and the reservoir while the rods are fully extended from the output end of the device. This gap allows for slight tuning during the printing. The rear plate may be angled by a degree or more from the plane defined by the input face of the reservoir to ensure contact from all rods with the substrate surface. Further, it has been observed that if the reservoir is twisted slightly (preferably between 20°-90°) on its longitudinal axis during redraw. In a reservoir having such a twist, and as the rods are extended from the output end of the device, the rods themselves will exit the channels directly in the center of each opening. This shift allows for more regular and predictable spacing between drops in the array.

In an alternative embodiment, two disks, a registration disk and a rear plate, are cut from the reservoir device as shown in FIG. 8. The rods are threaded either individually or, if the rod is u-shaped, two by two, into the input ends of each channel and fed through the registration disk such that each rod passes through a channel of the reservoir device and the complimentary cell from the registration disk. Similarly, the rods are threaded through the corresponding chamber from the rear plate and fixed in position by epoxy for example. Once all the rods are fixed in place, as the rear plate moves, so move the rods slidably within the channels. The registration disk has two opposing surfaces and is located between the rear plate and the input face of the reservoir device, and is not fixed in place. It is made up of a matrix of open ended cells that register on one surface with the channel openings on the input face of the reservoir device and register on another surface with the chambers of the rear plate. The registration disk can be slidably moved along the length of the rods. The purpose of the registration disk is to allow for insertion of the rod bundle once removed from the reservoir This way, the collection of rods attached to the rear plate may be removed from the reservoir, to allow for filing of the reservoir, for example. The bundle of rods can be easily fitted back into the channels through the input face of the reservoir device by sliding the registration disk to the end of the bundle opposite the rear plate. This way, the rods are properly spaced in relation to one another and may be simultaneously loaded into the reservoir device The registration disk will preferably never become detached from the bundle of rods. In this embodiment, the thickness of the rear plate is preferably approximately one-eighth the diameter of the input face of the reservoir, while the thickness of the registration disk is preferably approximately one-fourth the diameter of the input face of the reservoir.

The mechanism for transfer is ideally surface tension on the rod tip. In an alternative embodiment, it is possible to propel a stream of liquid from the channels by mechanical displacement. In this embodiment, the rods are sized such that they occupy greater than 90% of the cross-sectional area of the output face of each channel. The rods perform as pistons and force a quantifiable volume of liquid from each channel. The volume that is propelled out of each channel is a function of the viscosity of the liquid, the distance each rod is retracted, as well as the speed at which the rod is forced forward when dispensing.

As another alternative, and in cases where the surface energies of the liquid and substrate are incompatible, the substrate may be coated with a metallic layer, gold for example. Electrodes can be attached to the substrate surface as well as the metal rods of the device and the electrical differential may be employed to elicit droplet transfer from the rod tips to the substrate. This way, when the liquid contacts the surface, the circuit is complete and a droplet is deposited.

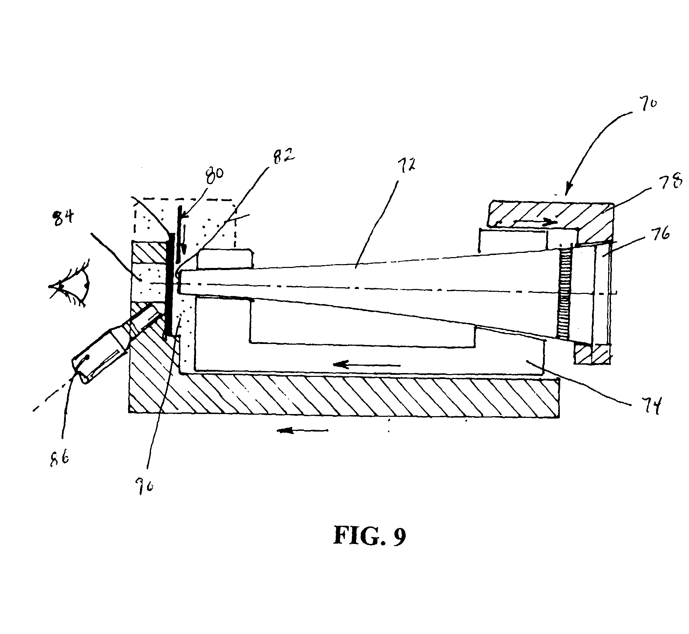

FIG. 9 is a cross-sectional schematic view of a capillary reservoir device printing tool employing the liquid transfer mechanism of the present invention **70.** The capillary reservoir device **72** is mounted and held fixed by a housing **74**. The rear plate **76** is fixed on a slidable mount **78** such that the mount may move back and forth in a horizontal plane. Located between the rear plate **76** and the reservoir device **72** is a registration disk **79**. A substrate **80** is lowered into a fixed printing position in front of the output face **82** of the device. An open passage **84** allows an operator to monitor the printing process as seen through the substrate **80** (assuming a transparent substrate). A UV lamp **86** having an unobstructed passage to the substrate is also fixed in position. The UV lamp **86** may be turned on immediately after a UV curable liquid is transferred to the substrate from the device in order to cure the biomolecule containing liquid to the plate before any loss to evaporation. The printing space **90** as defined by the dotted area is preferably an air tight and clean environment, free of any dust or other particulates that may contaminate the array. A shutter is placed over the output end of the reservoir device while the UV lamp is activated in order to prevent the curing of the gel still within the capillaries.

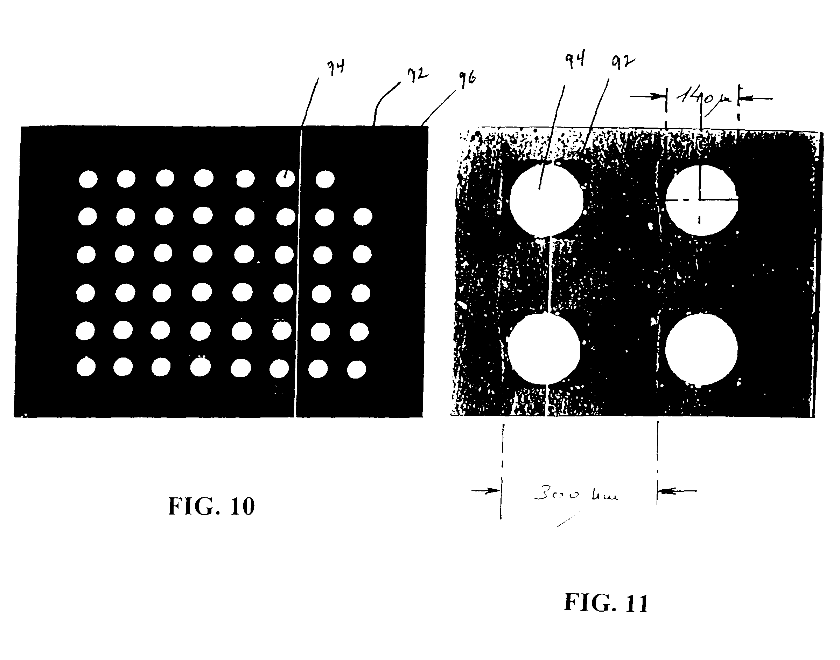

FIGS. 10-13 are photographs of the tool, the tool in operation, and a substrate after having been affected by the printing process. A sample tool was constructed such that a 6 X 8 array could be printed. FIG 10 shows the output face of the sample reservoir tool. Each channel **92** but one in a 6 X 8 matrix contains a stainless steel wire **94** having a diameter of approximately 140 µm. One channel **96** is left open for identification and orientation purposes. The number of channels within the matrix may be any number; for example to print an array of 10,000 drops in discrete regions, a 100 X 100 channel array would be employed.

FIG. 11 is an enlarged view of four selected channels from FIG. 10. The on center pitch between any two successive channels is approximately 300 µm in both the horizontal and vertical direction.

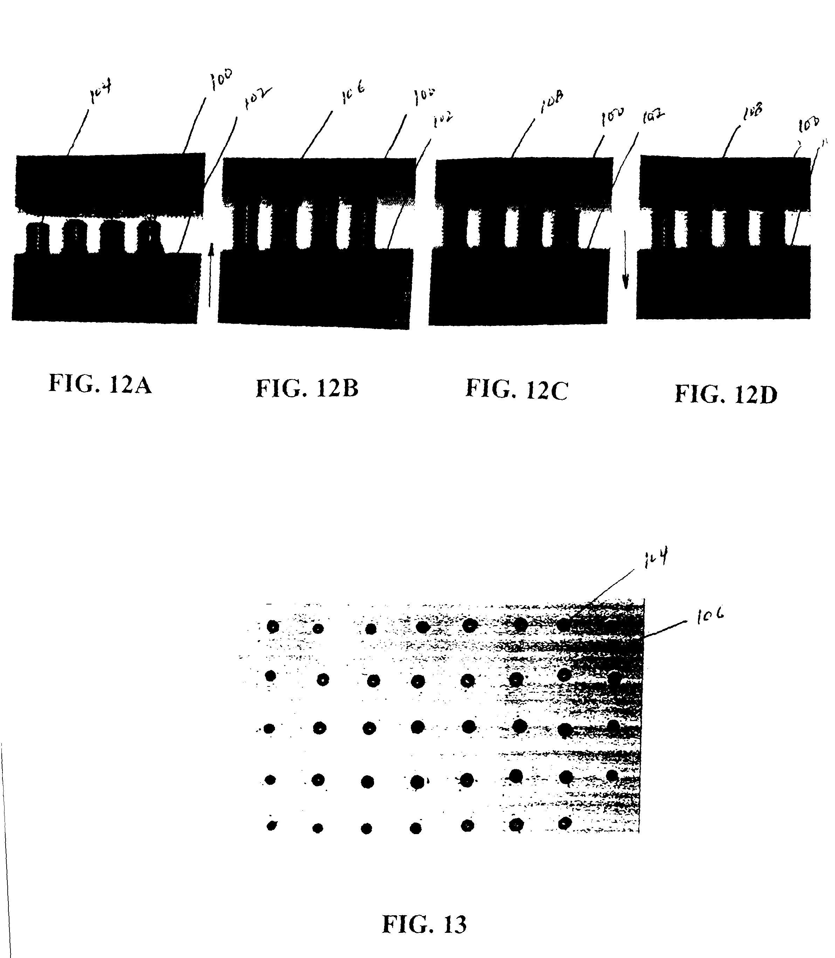

FIG. 12 shows a series of four rods **100** extended from the output end **102** of a capillary reservoir device Each rod tip contains a volume of liquid **104** as shown in FIG 12A. The rods are further extended until they contact a substrate **106** as shown in FIG 12B. Next, the rods are retracted leaving a volume of liquid **108** representative of its channel's contents in a corresponding region on the substrate.

FIG 13 is a top view of the substrate **106** after transfer. A 6 X 8 array results. Each spot **104** contains a volume of approximately 100 pl and the on center pitch between each is approximately 300 µm. It should be noted that no liquid was transferred from the channel **96** that did not contain a rod.

It should be noted that the capillary transfer mechanism and method described herein has the advantage over a printing mechanism that prints an array one dot at a time in that there is no tolerance buildup. In other words, since the array is printed in one step by contacting all the rods simultaneously on the substrate, the geometric relation of the spots in the array is guaranteed because the on center distances are fixed. The only potential tolerance is the rod position within the individual channel. Conversely, when a robotic spotter device prints one spot at a time, the x, y locations in the array are subjected to software and machine tolerances that potentially may build up as the array is printed. Eventually, such a buildup causes problems with identification and alignment of individual spots.

It may also be conceived that due to the alignment advantages of the present invention, a multiple print may be performed onto the same substrate. This has applications for combinatorial chemistry. In other words, a first printing may lay down an array of molecules. A second printing may lay down another array directly on top of the first. A reagent may then be added to facilitate reactions between the molecules on each site and the result is an array or library of compounds. Multiple printings and multiple combinations are possible at each discrete position.

It should also be noted that the capillary transfer device of the present invention should is not limited to the printing of DNA fragments. Any variety of biological or synthetic materials that are capable of being held within a liquid matrix may be employed by the use of this invention including, but not limited to: cells, phages, viable viral particles, proteins, ligands, epitopes, RNA, synthetic oligonucleotides, peptides, lectins, modified polysaccharides, synthetic composite macromolecules, functionalized nanostructures, synthetic polymers, modified/blocked nucleotides/nucleosides, modified/blocked amino acids, fluorophores, chromophores, chelates, haptens and other binding entities. Additionally, the application of this device is not limited to biological materials, but extends to any chemistry capable of being in liquid form or in a suspension including but not limited to emulsions, particle suspensions, and coacervates.

Although the invention has been described in detail for the purpose of illustration, it is understood that such detail is solely for that purpose and variations can be made therein by those skilled in the art without departing from the spirit and scope of the invention which is defined by the following claims.

## Claims

1. A device for depositing a high density biological or chemical array onto a substrate comprising:
a plurality of open ended channels collectively forming a matrix having an input face and an output face, each channel having fluid impervious walls;
at least one rod housed within at least one channel and capable of longitudinal movement within said channel;
whereby a liquid is capable of being retained in said at least one channel by capillary force; and,
whereby said rod is capable of delivering a volume of liquid from said at least one channel.

2. The device of claim 1 wherein said rod is capable of extending beyond said output face of said device.

3. The device of claim 2 wherein at least one of said channels is filled with liquid.

4. The device of claim 1 wherein said rods are fixably mounted to a rear plate.

5. The device of claim 4 wherein said rods have tips that are all within the same horizontal plane.

6. The device of claim 4 wherein said rear plate has a plurality of chambers therein that register with the channels from the input face of said matrix.

7. The device of claim 1 wherein said rods have a wetting tip and non-wetting sides.

8. The device of claim 4 further comprising a registration disk having two opposing surfaces located between said rear plate and said input face of said matrix, said registration disk having a corresponding matrix of open ended cells that register with the channel openings on said input face on the first surface and that register with said chambers on the second surface, wherein each said rod passes through a corresponding cell.

9. A printing mechanism for depositing an array of liquid drops comprising:
a plurality of rods connected to a rear plate;
a registration plate having a matrix of open ended cells; and,
wherein each said rod is threaded through a corresponding open ended cell in said registration plate.

10. A method of printing liquid onto a substrate comprising:
a) providing the device of claim 3;
b) extending said rod from said channel through said output face such that a drop of liquid from said channel is retained on the tip of said rod; and,
c) contacting said rod with a surface of said substrate.

11. The method of claim 8 further comprising the steps of:
retracting said rod within said channel such that said tip contacts said liquid; and
repeating steps (a) - (c) on a surface of a second substrate.
